# EUROPEAN PATENT SPECIFICATION

(11) **EP 2 458 499 B1**
(45) Date of publication and mention of the grant of the patent: **10.10.2018**
(21) Application number: 10801946.4
(22) Date of filing: 19.07.2010
(51) Int. Cl.: G06F 9/44

(54) **METHOD AND EQUIPMENT FOR GENERATING WIDGET**
VERFAHREN UND VORRICHTUNG ZUR GENERIERUNG VON WIDGETS
PROCÉDÉ ET ÉQUIPEMENT DE GÉNÉRATION D'OBJET GRAPHIQUE

(30) Priority: 20.07.2009 CN 200910161314
(43) Date of publication of application: 30.05.2012
(73) Proprietor: Huawei Technologies Co., Ltd., Longgang District Shenzhen, Guangdong 518129 (CN)
(72) Inventor: ZHANG, Jie, Shenzhen Guangdong 518129 (CN); FU, Haifang, Shenzhen Guangdong 518129 (CN)
(74) Representative: Epping - Hermann - Fischer
(86) International application number: PCT/CN2010/075243
(87) International publication number: WO 2011/009387

(56) References cited:
- CN-A- 1 816 043
- CN-A- 101 071 375
- US-B1- 6 686 937
- Marsh J et al: "XML Inclusions (XInclude) Version 1.0 (Second Edition)", Internet citation, 15 November 2006 (2006-11-15), pages 1-24, XP002481732, Retrieved from the Internet: URL:http://www.w3.org/TR/xinclude/ [retrieved on 2008-05-27]
- ZVON ORG: "XInclude Tutorial", INTERNET CITATION, 2005, XP002375707, Retrieved from the Internet: URL:http://www.zvon.org/xxl/XIncludeTutori al/Output/contents.html [retrieved on 2006-04-03]
- Grosso P et al: "XML Pointer Framework", Internet citation, 25 March 2003 (2003-03-25), pages 1-9, XP002678420, Retrieved from the Internet: URL:http://www.w3.org/TR/2003/REC-xptr-fra mework-20030325/ [retrieved on 2012-06-22]
- Anonymous: "Web widget", Wikipedia, 17 July 2009 (2009-07-17), pages 1-3, XP002678421, Retrieved from the Internet: URL:http://en.wikipedia.org/w/index.php?ti tle=Web_widget&oldid=302655297 [retrieved on 2012-06-07]

## Description

### FIELD OF THE INVENTION

The present invention relates to the field of Internet technologies, and in particular, to a method and an apparatus for generating a widget.

### BACKGROUND OF THE INVENTION

A widget is a practical tool which is based on a network and may be embedded into a Web page or independently run on a Personal Computer (PC) desktop or Internet terminals of other types, and definitely, the widget may also be referred to as Weiji in Chinese. For example, a clock widget may display current time on a desktop; a weather widget may display weather forecast of a customized region; a Central Processing Unit (CPU) widget may display an occupation ratio of a CPU; such widgets as a desktop search widget and a stock widget are further provided. Moreover, a widget may not only be used on the PC desktop, but also may be embedded into a Web page. For example, www.google.cn/ig is formed of a plurality of widgets. Additionally, a widget may also be run on such embedded devices as a mobile phone, a digital photo frame, and a digital television. A user may also make a particular widget of his/her own and share it with others, which thereby greatly enriches the widget world. With the enhancement of service capabilities of terminals and networks, the application range of a widget becomes wider and wider, and the number of widgets developed by users also becomes larger and larger.

However, in the implementation of the present invention, it is found that, currently it is universally accepted in the industry that a widget is only a small application capable of executing a simple logic and complementing a single task. When a widget is made, it needs to be achieved in a manner of writing a code, and a user needs to have knowledge of various aspects such as image processing, Hyper Text Markup Language (HTML)/Extensible Markup Language (XML), and java, so that the workload of developing a widget is heavy, which thereby greatly limits the application of a widget.

D1 (Marsh J et al: "XML Inclusions (XInclude) Version 1.0 (Second Edition)") specifies a processing model and syntax for general purpose inclusion. Inclusion is accomplished by merging a number of XML information sets into a single composite infoset. Specification of the XML documents (infosets) to be merged and control over the merging process is expressed in XML-friendly syntax (elements, attributes, URI references).

### SUMMARY OF THE INVENTION

The present invention provides a method and an apparatus for generating a widget, a method for running a widget, a widget engine, and a client device, which generate a widget through combination and reuse of existing widgets, so as to reduce the workload of widget development.

In order to achieve the foregoing objectives, the present invention provides the following solutions:
A method for generating a widget is provided, wherein widget refers to application and is formed of markup language and script language, which includes:
obtaining identification information of elements to be reused in a source widget, wherein a source widget refers to an existing widget; the elements to be reused comprise at least one type of the elements including the source widget, a node in a Document Object Model, DOM, tree of the source widget, and a variable or an object in the source widget which is created in running procedure;
generating a logical relation between the elements to be reused, wherein a logical relation between the elements to be used refers to a logical relation between elements to be reused in a widget to be generated and includes at least one type of a combination relation, a precedence relation or a collaboration relation; and the generating a logical relation between the elements to be reused comprises expressing each logical relation into a language recognizable to a widget running apparatus; and
generating code of a widget including the identification information of the elements to be reused and the logical relation according to the identification information of the elements to be reused and the logical relation.

An apparatus for generating a widget is provided, wherein widget refers to application and is formed of markup language and script language, which includes:
an identification unit U501, configured to obtain identification information of elements to be reused in a source widget, wherein a source widget refers to an existing widget; the elements to be reused comprise at least one type of the elements including the source widget, a node in a Document Object Model, DOM, tree of the source widget, and a variable or an object in the source widget which is created in running procedure;
a logical relation generation unit U502, configured to generate a logical relation between the elements to be reused, wherein a logical relation between the elements to be used refers to a logical relation between elements to be reused in a widget to be generated and includes at least one type of a combination relation, a precedence relation or a collaboration relation; and the generating a logical relation between the elements to be reused comprises expressing each logical relation into a language recognizable to a widget running apparatus; and
a widget generation unit U503, configured to generate code of a widget carrying the identification information of the elements to be reused and the logical relation according to the identification information of the elements to be reused and the logical relation.

A method for running a widget is provided, wherein widget refers to application and is formed of markup language and script language, which includes:
recognizing a widget including identification information and a logical relation of elements to be reused;
obtaining elements to be reused from a source widget according to the identification information of the elements to be reused; and
parsing the logical relation, inserting the elements to be reused into the widget, and executing and rendering the widget;
wherein a source widget refers to an existing widget; the elements to be reused comprise at least one type of the elements including the source widget, a node in a Document Object Model (DOM) tree of the source widget, and a variable or an object in the source widget which is created in running procedure; a logical relation between the elements to be used refers to a logical relation between elements to be reused in a widget to be generated and includes at least one type of a combination relation, a precedence relation or a collaboration relation.

A widget engine is provided, wherein widget refers to application and is formed of markup language and script language , which includes:
a recognition unit U701, configured to recognize a widget including identification information and a logical relation of elements to be reused;
an obtaining unit U702, configured to obtain elements to be reused from a source widget according to the identification information of the elements to be reused; and
a parsing unit U703, configured to parse the logical relation, insert the elements to be reused into the widget, and execute and render the widget;
wherein a source widget refers to an existing widget; the elements to be reused comprise at least one type of the elements including the source widget, a node in a Document Object Model, DOM, tree of the source widget, and a variable or an object in the source widget which is created in running procedure; a logical relation between the elements to be used refers to a logical relation between elements to be reused in a widget to be generated and includes at least one type of a combination relation, a precedence relation or a collaboration relation.

A client device is provided, which includes:
an apparatus for generating a widget, configured to obtain identification information of elements to be reused in a source widget, generate a logical relation between the elements to be reused, and generate code of a widget carrying the identification information of the elements to be reused and the logical relation according to the identification information of the elements to be reused and the logical relation; and
a widget engine, configured to obtain elements to be reused according to the identification information of the elements to be reused, parse the logical relation, insert the elements to be reused into the widget, and execute and render the widget;
wherein a source widget refers to an existing widget; the elements to be reused comprise at least one type of the elements including the source widget, a node in a Document Object Model, DOM, tree of the source widget, and a variable or an object in the source widget which is created in running procedure; a logical relation between the elements to be used refers to a logical relation between elements to be reused in a widget to be generated and includes at least one type of a combination relation, a precedence relation or a collaboration relation.

According to specific embodiments of the present invention, the present invention discloses the following technical effects.

The embodiments of the present invention are capable of: obtaining identification information of elements to be reused in a source widget; generating a logical relation between the elements to be reused; and generate a widget carrying the identification information of the elements to be reused and information of the logical relation according to the identification information of the elements to be reused and the logical relation. Therefore, a new widget may be generated through combination and reuse of existing widgets, so that it is unnecessary to write a code in a development procedure, which reduces the workload of widget development and is beneficial to the development of widget technologies.

### BRIEF DESCRIPTION OF THE DRAWINGS

To illustrate the technical solutions according to the embodiments of the present invention or in the prior art more clearly, the accompanying drawings for describing the embodiments are introduced briefly in the following. Apparently, the accompanying drawings in the following description are only some embodiments of the present invention, and persons skilled in the art may derive other drawings from the accompanying drawings without creative efforts.
FIG. 1 is a flow chart of a method for generating a widget according to an embodiment of the present invention;
FIG. 2 is a flow chart of another method for generating a widget according to an embodiment of the present invention;
FIG. 3 is a flow chart of a method for running a widget according to an embodiment of the present invention;
FIG. 4 is a flow chart of another method for running a widget according to an embodiment of the present invention;
FIG. 5 is a schematic diagram of a first apparatus for generating a widget according to an embodiment of the present invention;
FIG. 6 is a schematic diagram of a second apparatus for generating a widget according to an embodiment of the present invention; and
FIG. 7 is a schematic diagram of a widget engine according to an embodiment of the present invention.

### DETAILED DESCRIPTION OF THE EMBODIMENTS

The technical solutions of the present invention are clearly described in the following with reference to the accompanying drawings of the present invention. It is obvious that the embodiments to be described are only a part rather than all of the embodiments of the present invention. All other embodiments obtained by persons skilled in the art based on the embodiments of the present invention without creative efforts shall fall within the protection scope of the present invention.

In order to make the foregoing objectives, features, and advantages of the present invention more comprehensible, the present invention is further described in detail in the following through specific embodiments with reference to the accompanying drawings.

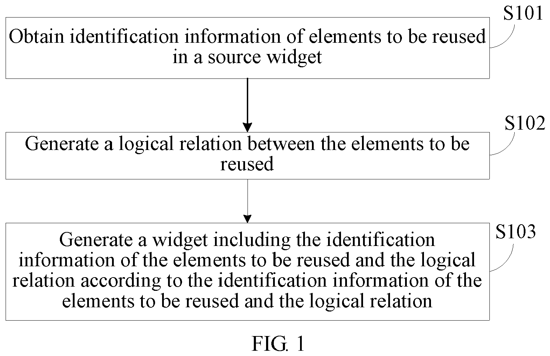

Referring to FIG. 1, a method for generating a widget according to an embodiment of the present invention includes the following steps:
S101: Obtain identification information of elements to be reused in a source widget.

The source widget refers to an existing widget, and the existing widget may be generated according to a method in the prior art, and may also be generated according to the method in the embodiment of the present invention.

The elements to be reused refer to elements in a source widget that need to be reused, and the elements to be reused need to be used in a newly generated widget. An identification of an element to be reused is obtained, so that when a newly generated widget is run, the element to be reused may surely be found uniquely.

S102: Generate a logical relation between the elements to be reused.

The logical relation between the elements to be reused refers to a logical relation between elements to be reused in a new widget, and may include a simple combination relation, a precedence relation, or a complex collaboration relation. The combination relation means to simply combine elements to be reused to form a new widget; the precedence relation refers to a certain precedence relation between elements to be reused, for example, an output of a previous element to be reused is used as an input of a next element to be reused; the collaboration relation refers to a complex logical relation between elements to be reused, which may be specifically determined according to practical applications.

The generating the logical relation between the elements to be reused is to express each logical relation into a language recognizable to a widget running apparatus, so that when the newly generated widget is run, the logical relation may be normally parsed. Specifically, various generation methods are provided, for example, the logical relation may be written in a markup language of a widget, and the logical relation may be generated through a layout function of the markup language; also, the logical relation may be written in a configuration file, and the logical relation may be generated by using a tag; further, the logical relation may be written in a script language of a widget, and the logical relation may be generated by using the script language.

S103: Generate a widget including the identification information of the elements to be reused and the logical relation according to the identification information of the elements to be reused and the logical relation.

It should be noted that, in order to achieve the foregoing solution, an embodiment of the present invention provides a tool for generating a widget, and the subject performing steps S101 to S103 is the tool for generating a widget. Generally, the tool for generating a widget may have an operation area, a preview area and a code area. The operation area is used to operate elements to be reused, the preview area is used to present effects of a newly generated widget, and the code area is used to present a code corresponding to a newly generated widget.

Additionally, it should be noted that, when the identification information of the elements to be reused is obtained, and the logical relation between the elements to be reused is generated, a recognizable code of a widget may be automatically generated by the tool, so that in a procedure of generating a widget, no code needs to be manually written.

It may be seen that, according to the embodiment of the present invention, a new widget may be generated through combination and reuse of existing widgets, so that it is unnecessary to write a code in a development procedure, which reduces the workload of widget development and is beneficial to the development of widget technologies.

When the identification information of elements to be reused in the source widget is obtained, the elements to be reused may be obtained automatically by the tool according to a certain preset policy (for example, selecting core elements in a source widget), and then identification information of elements to be reused is obtained; in the embodiment of the present invention, elements to be reused may also be selected by a user, and the tool may provide a portal for selecting elements to be reused to the user. For example, the tool may recognize elements in a source widget, and prompt the user for selectable elements (for example, highlighting selectable elements with a prompt box) after recognizing elements in a source widget, and if the user intends to reuse a certain element, the user may click the element; at this time, the tool determines that the element clicked by the user is an element to be reused; at this time, identification information that is about the element selected by the user and is displayed in the instruction is the identification information of the elements to be reused. Similarly, a user may further select other elements in the source widget or elements in other source widgets.

Likewise, when the logical relation between the elements to be reused is generated, the logical relation may be generated automatically by the tool according to a certain preset policy (for example, presetting the logical relation as a simple combination relation); definitely, the logical relation may also be set by a user, and the tool provides a portal for setting a logical relation to a user, and then receives an instruction that a user sets logical relation information between elements to be reused through the portal, and at this time, the logical relation set by the user and displayed in the instruction is the logical relation among the information to be reused, and then the tool automatically generates a code of the logical relation set by the user. For example, if a user intends to set a combination relation, after selecting elements to be reused, the user may directly drag the elements to be reused to the preview area of a new widget. After detecting occurrence of the dragging event, the tool may determine that the logical relation is a combination relation, and meanwhile may generate a code of such a logical relation in the foregoing manners, thereby generating a corresponding code. For another example, if a user intends to set a precedence relation between two elements to be reused, the user may firstly click a first element to be reused, and then drag the first element to be reused onto a second element to be reused, and when detecting occurrence of such an event, the tool may judge that a user is to set a precedence relation, and then may automatically use output data of the first element to be reused as input data of the second element to be reused, and generate a corresponding code to express the precedence relation.

The elements to be reused may include the source widget the entire source widget), a node to be reused in a source widget, or a variable or an object to be reused in a source widget. That is, granularity of reused information may be refined into a node or even a variable or an object.

For a widget and a node in a widget, because the corresponding content may be intuitively demonstrated in front of a user as long as the widget is opened, the user may directly select the content corresponding to a widget to be reused or a node to be reused in the widget. However, a variable or an object (for example, a variable or an object created in a script language running procedure) in the widget is generally not directly displayed to the user, so the user may not directly know what variables or objects the widget has.

Therefore, the tool may also recognize the variable or the object in the widget and prompt the user, so that the user may select the variable or the object in the widget in the same manner as selecting other elements. Definitely, after being selected, the variable or the object may be dragged to a code area rather than a preview area, and the user may perform such operations as editing on the variable or the object in the code area.

Elements to be reused of different types need to be identified by adopting a corresponding method. For example, elements to be reused may be identified by adopting the following format: [widgetID, [NodeID, [ObjectID]]].

The widgetID is used to uniquely identify a source widget of elements to be reused. The identification information of the elements to be reused may be an identifier (ID) of a widget allocated by a system, and may also be a storage path of the widget; by utilizing the identification information, the source widget may be found when a new widget is run.

The NodeID is used to uniquely identify a node that needs to be reused in a widget. When such elements to be reused are marked up, identification information may be a node ID, and a path of the node in a Document Object Model (DOM) tree of a source widget may also be identified by using an XPath syntax. Sometimes, in order to obtain certain node content which may only be presented through user interaction, the NodeID further needs to contain information for user interaction.

The DOM is a set of nodes or information clips organized in a hierarchical structure. Such a hierarchical structure allows a developer to navigate and search for specific information in a tree. Because the hierarchical structure is based on an information level, the DOM is regarded as being based on a tree or based on an object.

The ObjectID is used to identify a variable or an object to be reused in a widget. Because no variable or object exists in the DOM tree of a source widget, in order to mark up a variable or an object, an extended DOM tree may be constructed for each source widget, a variable or an object in the DOM tree of a source widget associated with a certain node (the variable or the object herein is a variable or an object which may be provided for reuse) may be used as a leaf node of this node, and the leaf node may be stored at a path in the extended DOM tree. In this way, when a new widget is run, the source widget may be found through the path, and then the node associated with the variable or the object to be reused may be found, and thereby a variable or an object to be reused is found.

After identification information of elements to be reused is obtained, the identification information is further stored, and specifically, identification information may be stored at the following positions: in a script area of a widget source file; in a configuration file of a widget source file; and a layout file of a widget source file. Identification information may also be stored in various forms, for example, identification information may be stored as a string text, a script variable, a Uniform Resource Locator (URL) reference, a tag or tag attribute in a markup language (such as HTML and XML).

After identification information of elements to be reused is obtained, and a logical relation between elements to be reused is generated, a widget carrying the identification information of the elements to be reused and the logical relation information may be generated. In practical applications, before a widget is generated finally, adjustment may be further performed, for example, a node layout may be adjusted, and/or, new service logic may be added. The adjustment may be automatically completed by the tool, and the layout adjustment may also be completed by a user in a manner of writing a code.

In a case of user adjustment, the adjusting the node layout is specifically as follows: a user may change the position of each element to be reused in the preview area by dragging an element, the tool may correspondingly adjust the node in the DOM tree; the adding the new service logic is specifically as follows: a user may add new service logic in a code area by editing a code.

It should be noted that, in the procedure of adding new service logic, although a user still needs to write a certain code, the workload is greatly reduced as compared with the method for generating a widget completely in dependence on writing a code in the prior art.

In order to better understand the method for generating a widget according to the embodiment of the present invention, a user selecting elements to be reused and setting a logical relation are introduced as an example in detail in the following.

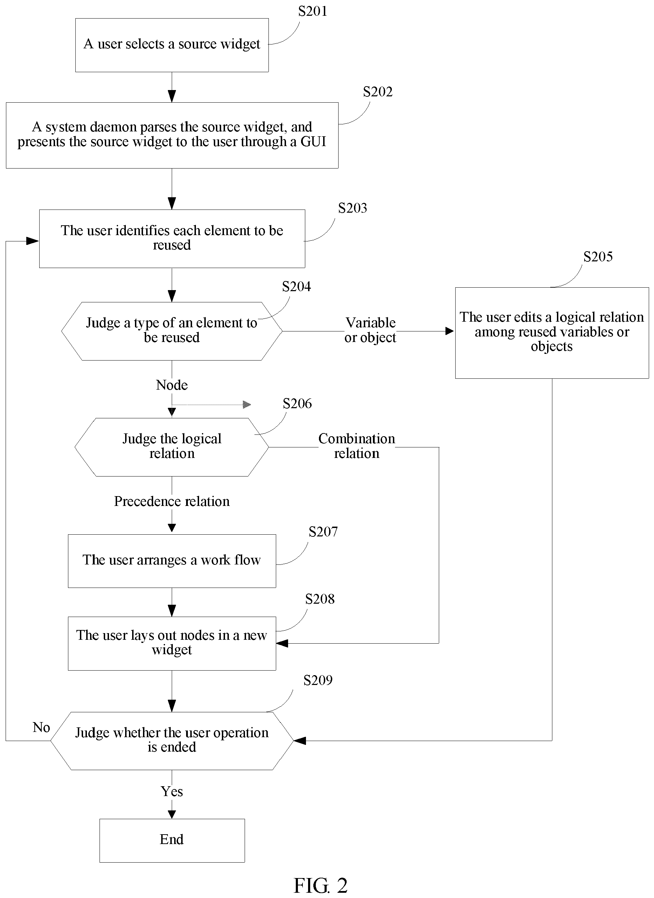

Referring to FIG. 2, the method includes the following steps:
S201: A user selects a source widget.
S202: A system daemon (that is, a tool for generating a widget) parses the source widget, and presents the source widget to the user through a Graphical User Interface (GUI).
S203: The user identifies each element to be reused.
S204: The tool for generating a widget judges a type of an element to be reused; if the element is a node, the process proceeds to step S206, and if the element is a variable or an object, the process proceeds to step S205.
S205: The user sets a logical relation among reused variables or objects, and the process proceeds to step S209.
S206: The tool for generating a widget judges the logical relation set by the user, and if the logical relation is a simple combination relation, the process proceeds to step S208; if the logical relation is a precedence relation, the process proceeds to step S207.
S207: The user arranges a work flow.
S208: The user lays out nodes in a new widget.
S209: The tool for generating a widget judges whether the user operation is ended, and if the user operation is ended, the process is ended; otherwise, the process returns to step S203.

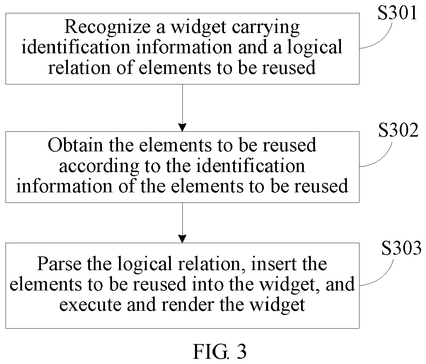

After a new widget is generated according to the method in the embodiment of the present invention, the new widget may be run in a widget engine, and the running of the new widget needs to depend on a source widget, which is different from running an ordinary widget. In order to run the newly generated widget in the widget engine of a client, in an embodiment, the present invention further provides a method for running a widget. Referring to FIG. 3, the method includes the following steps:
S301: Recognize a widget carrying identification information and logical relation information of elements to be reused.

The widget carrying the identification information and the logical relation information of the elements to be reused is a widget generated according to the method in the embodiment of the present invention, and for convenience of description, is referred to as a new widget in the following.

S302: Obtain the elements to be reused according to the identification information of the elements to be reused.

Because the widget carries identification information of elements to be reused, and may uniquely identify elements to be reused, the source widget where elements to be reused are located may be located through the identification information, and elements needed to be reused may be found after the source widget is located. Therefore, step S302 may specifically include: locating a source widget according to the identification information of the elements to be reused; and running the source widget, and obtaining the elements to be reused from the source widget.

S303: Parse the logical relation, insert the elements to be reused into the widget, and execute and render the widget.

The logical relation may simply exist in a form of codes, and a widget engine may directly parse a code, and insert elements to be reused into a widget; additionally, the logical relation may also be embodied in a form of a DOM tree, and a widget engine may also parse a DOM tree, and then insert a node according to the DOM tree. After a new widget is rendered, content of the new widget may be demonstrated in front of a user.

Specifically, when the logical relation is parsed, various manners may be adopted, which for example may include the following manners. The logical relation may be parsed from a configuration file; or the logical relation may be used as a system function of a widget engine and provided to a new widget for a script language to invoke; or all the logical relations may be written into a script area of a new widget and executed by a script engine.

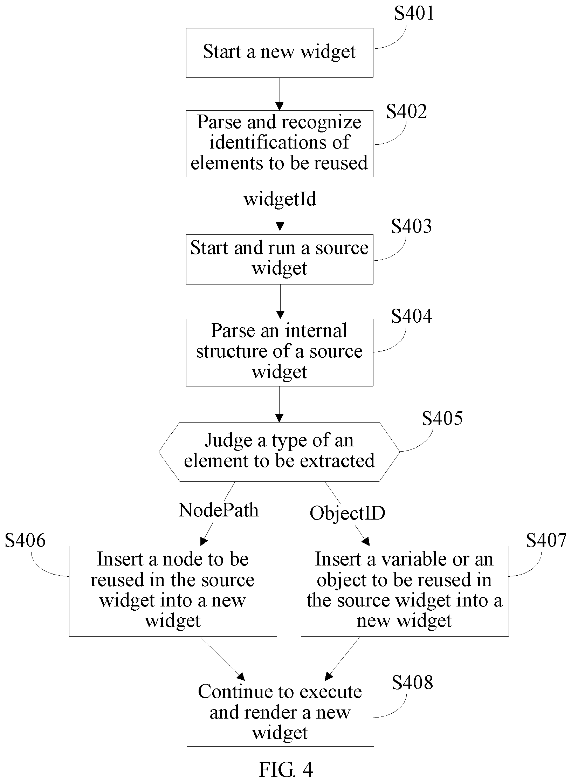

Referring to FIG. 4, during specific implementation, running a widget may include the following steps:
S401: Start a new widget.
S402: Parse and recognize identification information of elements to be reused.
S403: Start and run a source widget.
S404: Parse an internal structure of a source widget.
S405: Judge a type of an element to be extracted, and if an element to be extracted is a node, the process proceeds to step S406; if an element to be extracted is a variable or an object, the process proceeds to step S407.
S406: Insert a node to be reused in the source widget into a new widget, and the process proceeds to step S408.
S407: Insert a variable or an object to be reused in the source widget into a new widget, and the process proceeds to step S408.
S408: Continues to execute and render a new widget.

The foregoing describes the method for generating a widget according to the embodiment of the present invention, and the method for running the widget generated according to the embodiment of the present invention. It should be noted that, the widget is generally formed of HTML and Java Script, and the parsing the widget may be achieved by constructing a DOM tree. For other widgets not conforming to World Wide Web Consortium (W3C) standards (such as a widget made by using a self-defined XML tag), the embodiments of the present invention are also applicable. As long as the tool for generating a widget is capable of acquiring a node to be reused or a variable and an object to be reused in the source widget by parsing, a new widget may be generated according to the method in the embodiment of the present invention; as long as a widget running apparatus (a widget engine) is capable of recognizing identification information of elements to be reused, extracting elements to be reused according to the identifications and inserting the elements into the new widget, combination and reuse of widgets may be achieved.

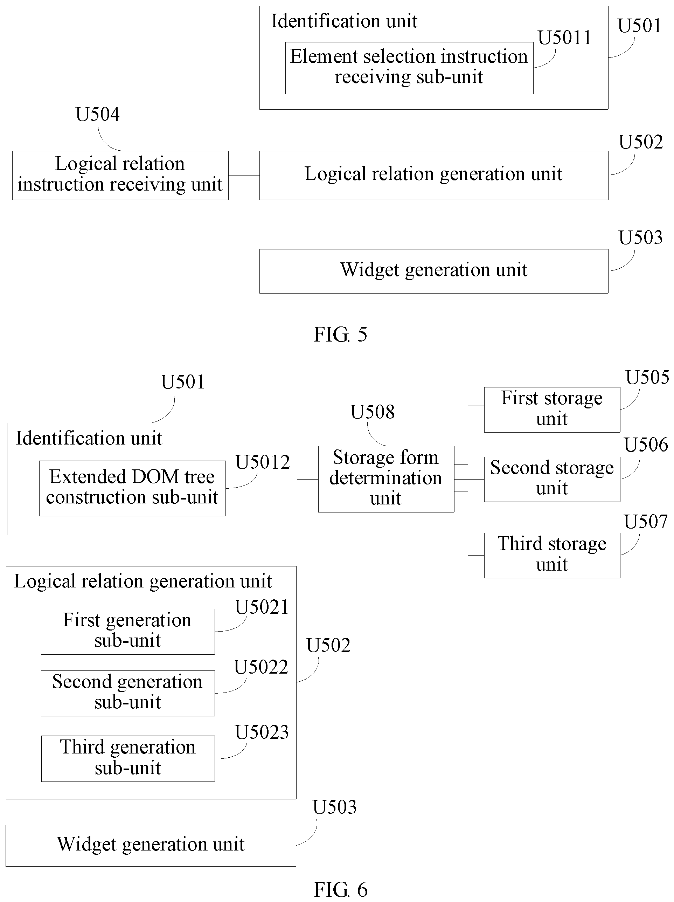

Corresponding to the method for generating a widget according to the embodiment of the present invention, in an embodiment, the present invention further provides an apparatus for generating a widget. Referring to FIG. 5, the apparatus includes the following units:
an identification unit U501, configured to obtain identification information of elements to be reused in a source widget;
a logical relation generation unit U502, configured to generate a logical relation between the elements to be reused; and
a widget generation unit U503, configured to generate a widget including the identification information of the elements to be reused and information of the logical relation according to the identification information of the elements to be reused and the logical relation.

The elements to be reused may be specified by a user, and at this time, the identification unit U501 may include the following sub-unit:
an element selection instruction receiving sub-unit U5011, configured to receive an instruction that a user sets an element in the source widget; at this time, identification information that is about the element selected by the user and is displayed in the instruction is the identification information of the elements to be reused.

The logical relation between the elements to be reused may be automatically preset by a tool, and may also be set by a user, and when the logical relation between the elements to be reused needs to be specified by the user, the apparatus may further include:
a logical relation instruction receiving unit U504, configured to receive an instruction that a user sets the logical relation between the elements to be reused; correspondingly, the logical relation set by the user and displayed in the instruction is the logical relation among the information to be reused.

Various types of the elements to be reused may be provided. When the element to be reused in the source widget is a variable or an object to be reused in the source widget, because no variable or object exists in a DOM tree of the source widget, referring to FIG. 6, the identification unit U501 may include the following sub-unit:
an extended DOM tree construction sub-unit U5012, configured to construct an extended DOM tree for a DOM tree of the source widget, and use a variable or an object to be reused and associated with a certain node in the DOM tree of the source widget as a leaf node of the node; at this time, a path of the leaf node in the extended DOM tree is the identification information of the elements to be reused.

The identification information of elements to be reused is obtained, the identification information may be further stored, and the identification information of elements to be reused may be stored at a plurality of positions. Specifically, the apparatus may further include:
a first storage unit U505, configured to store the identification information of the elements to be reused in a script area of a widget source file;
   or,
a second storage unit U506, configured to store the identification information of the elements to be reused in a configuration file of a widget source file;
   or,
a third storage unit U507, configured to store the identification information of the elements to be reused in a layout file of a widget source file.

Additionally, the identification information may be further stored in various forms, as long as the forms may be recognized by a widget engine. Specifically, the apparatus may further include:
a storage form determination unit U508, configured to store the identification information of the elements to be reused as a string text, a script variable, a URL reference, or a tag or tag attribute in a markup language.

Various specific manners may also be provided for the logical relation generation unit U502 to express a logical relation. Specifically, the logical relation generation unit U502 may include:
a first generation sub-unit U5021, configured to write the logical relation in a markup language of the widget, and generate the logical relation through a layout function of the markup language;
   or,
a second generation sub-unit U5022, configured to write the logical relation in a configuration file, and generate the logical relation by using a tag;
   or,
a third generation sub-unit U5023, configured to write the logical relation in a script language of the widget, and generate the logical relation by using the script language.

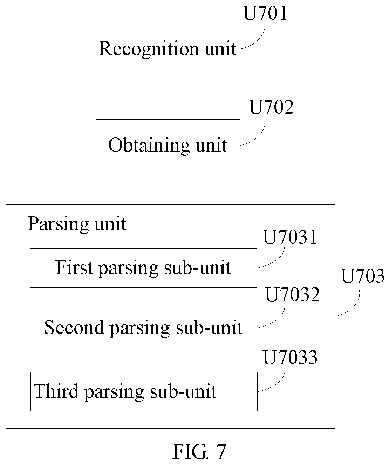

Corresponding to the method for running a widget according to the embodiment of the present invention, in an embodiment, the present invention further provides a widget engine. Referring to FIG. 7, the widget engine is implemented at a client, and includes the following units:
a recognition unit U701, configured to recognize a widget including identification information and logical relation information of elements to be reused;
an obtaining unit U702, configured to obtain elements to be reused according to the identification information of the elements to be reused; in this embodiment, the obtaining unit U702 may firstly locate the source widget according to the identification information of the elements to be reused, then run the source widget, and obtain the elements to be reused from the source widget, so as to finally obtain the elements to be reused; and
a parsing unit U703, configured to parse the logical relation, insert the elements to be reused into the widget, and execute and render the widget.

The parsing unit U703 may include the following sub-units:
a first parsing sub-unit U7031, configured to parse the logical relation from a configuration file;
   or,
a second parsing sub-unit U7032, configured to invoke, through a script language, the logical relation used as a system function;
   or,
a third parsing sub-unit U7033, configured to execute, through a script engine, the logical relation written in a script area of the widget.

Through the apparatus according to the embodiment of the present invention, a new widget may be generated through combination and reuse of existing widgets, so that it is unnecessary to write a code in the development procedure, which reduces the workload of widget development and is beneficial to the development of widget technologies.

Moreover, in an embodiment, the present invention further provides a client device, which includes:
an apparatus for generating a widget, configured to obtain identification information of elements to be reused in a source widget, generate a logical relation between the elements to be reused, and generate a widget carrying the identification information of the elements to be reused and the logical relation according to the identification information of the elements to be reused and the logical relation; and
a widget engine, configured to obtain the elements to be reused according to the identification information of the elements to be reused, parse the logical relation, insert the elements to be reused into the widget, and execute and render the widget.

In this embodiment, the apparatus for generating a widget and the widget engine may also form a client device, and developers or users jointly experience how to generate a widget through the client device.

Persons skilled in the art may understand that all or part of the steps of the method according to the embodiments of the present invention may be implemented by a program instructing relevant hardware. The program may be stored in a computer readable storage medium. When the program is executed, the following steps are performed: obtaining identification information of elements to be reused in a source widget; generating a logical relation between the elements to be reused; and generating a widget carrying the identification information of the elements to be reused and the logical relation according to the identification information of the elements to be reused and the logical relation. The storage medium may be a Read-Only Memory (ROM), a Random Access Memory (RAM), a magnetic disk, or an optical disk.

A method and an apparatus for generating a widget according to the present invention are introduced in detail in the foregoing. The principle and implementation ways of the present invention are described herein through specific examples. The foregoing description about the embodiments is merely provided for ease of understanding of the method and core ideas of the present invention. Persons skilled in the art may make variations and modifications to the present invention in terms of the specific implementations and application scopes according to the ideas of the present invention. Therefore, the specification shall not be construed as a limit to the present invention. The invention is defined by the appended independent claims. The dependent claims define preferred embodiments.

## Claims

1. A method for generating a widget, wherein a widget is a small, user-interface based application and is formed of markup language and script language, **characterized by** comprising:
obtaining identification information of elements to be reused in a source widget, wherein the source widget refers to an existing widget; the elements to be reused comprise an entire source widget, a node in a Document Object Model, DOM, tree of a source widget, and a variable or an object in a source widget which is created in a running procedure; the variable or the object in the source widget is a leaf node in an extended DOM tree of the source widget, wherein the extended DOM tree is constructed by using a variable or an object associated with a certain node in a DOM tree of the source widget as a leaf node of the certain node;
generating a logical relation between the elements to be reused, wherein a logical relation between the elements to be used refers to a logical relation between elements to be reused in a widget to be generated and includes a combination relation and a precedence relation; wherein the combination relation means to combine elements to be used and the precedence relation refers to a relation that an output of a previous element to be reused is used as an input of a next element to be reused; and the logical relation is generated by writing the logical relation in the markup language, in a configuration file or in the script language; and
generating code of a widget comprising the identification information of the elements to be reused and the logical relation according to the identification information of the elements to be reused and the logical relation.

2. The method according to claim 1, wherein the obtaining the identification information of the elements to be reused in the source widget comprises:
receiving an instruction that a user selects an element in the source widget, wherein identification information about the element selected by the user, which is indicated in the instruction, is the identification information of the elements to be reused.

3. The method according to claim 1, wherein before the generating the logical relation between the elements to be reused, the method further comprises:
receiving an instruction that a user sets the logical relation between the elements to be reused, wherein the logical relation set by the user and indicated in the instruction is the logical relation among information to be reused.

4. The method according to claim 1, wherein the elements to be reused comprise the source widget and the identification information of the elements to be reused comprises:
an identifier (ID) of the source widget allocated by a system or a storage path of the source widget.

5. The method according to claim 1, wherein the elements to be reused comprise a node in a DOM tree of the source widget, and the identification information of the elements to be reused comprises:
an ID of the node or a path of the node in the DOM tree of the source widget.

6. The method according to claim 1, wherein a path of the leaf node in the extended DOM tree is the identification information of the elements to be reused.

7. The method according to claim 1, further comprising:
storing the identification information of the elements to be reused in a script area of a widget source file;
or,
storing the identification information of the elements to be reused in a configuration file of a widget source file;
or,
storing the identification information of the elements to be reused in a layout file of a widget source file.

8. The method according to claim 1, further comprising:
storing the identification information of the elements to be reused as a string text, a script variable, a Uniform Resource Locator (URL) reference, or a tag or tag attribute in a markup language.

9. An apparatus for generating a widget, wherein a widget is a small, user-interface based application and is formed of markup language and script language, **characterized by** comprising:
an identification unit (U501), configured to obtain identification information of elements to be reused in source widgets, wherein the source widgets refers to existing widgets; the elements to be reused comprise an entire source widget, a node in a Document Object Model, DOM, tree of a source widget, and a variable or an object in a source widget which is created in running procedure; the variable or the object in the source widget is a leaf node in an extended DOM tree of the source widget, wherein the extended DOM tree is constructed by using a variable or an object associated with a certain node in a DOM tree of the source widget as a leaf node of the certain node;
a logical relation generation unit (U502), configured to generate a logical relation between the elements to be reused, wherein a logical relation between the elements to be used refers to a logical relation between elements to be reused in a widget to be generated and includes a combination relation and a precedence relation; wherein the combination relation means to combine elements to be used and the precedence relation refers to a relation that an output of a previous element to be reused is used as an input of a next element to be reused; and the logical relation is generated by writing the logical relation in the markup language, in a configuration file or in the script language; and
a widget generation unit (U503), configured to generate code of a widget carrying the identification information of the elements to be reused and the logical relation according to the identification information of the elements to be reused and the logical relation.

10. The apparatus according to claim 9, wherein the identification unit comprises:
an element selection instruction receiving sub-unit (U5011), configured to receive an instruction that a user selects an element in the source widget, wherein identification information about the element selected by the user, which is indicated in the instruction, is the identification information of the elements to be reused.

11. The apparatus according to claim 9, further comprising:
a logical relation instruction receiving unit (U504), configured to receive an instruction that a user sets the logical relation between the elements to be reused, wherein the logical relation set by the user and indicated in the instruction is the logical relation among information to be reused.

12. The apparatus according to claim 9, wherein the elements to be reused comprise a variable or an object in the source widget which is created in a running procedure, and the identification unit comprises:
an extended DOM tree construction sub-unit (U5012), configured to construct an extended DOM tree for the DOM tree of the source widget, and use a variable or an object to be reused and associated with a certain node in the DOM tree of the source widget as a leaf node of the node, wherein a path of the leaf node in the extended DOM tree is the identification information of the elements to be reused.

13. The apparatus according to claim 9, further comprising:
a first storage unit (U505), configured to store the identification information of the elements to be reused in a script area of a widget source file;
or,
a second storage unit (U506), configured to store the identification information of the elements to be reused in a configuration file of a widget source file;
or,
a third storage unit (U507), configured to store the identification information of the elements to be reused in a layout file of a widget source file.

14. The apparatus according to claim 9, further comprising:
a storage form determination unit (U508), configured to store the identification information of the elements to be reused as a string text, a script variable, a Uniform Resource Locator (URL) reference, or a tag or tag attribute in a markup language.

15. The method of generating a widget according to the method of claim 1, additionally comprising:
recognizing a widget comprising identification information and a logical relation of elements to be reused;
obtaining the elements to be reused from a source widget according to the identification information of the elements to be reused; and
parsing the logical relation, inserting the elements to be reused into the widget, and executing and rendering the widget;
wherein a source widget refers to an existing widget; the elements to be reused comprise the entire source widget, a node in a Document Object Model, DOM, tree of the source widget, and a variable or an object in the source widget which is created in a running procedure; the variable or the object in the source widget is a leaf node in an extended DOM tree of the source widget, wherein the extended DOM tree is constructed by using a variable or an object associated with a certain node in a DOM tree of the source widget as a leaf node of the certain node;
wherein a logical relation between the elements to be used refers to a logical relation between elements to be reused in a widget to be generated, includes a combination relation and a precedence relation; wherein the combination relation means to combine elements to be used and the precedence relation refers to a relation that an output of a previous element to be reused is used as an input of a next element to be reused; the logical relation is generated by writing the logical relation in the markup language, in a configuration file or in the script language.

16. The method according to claim 15, wherein the obtaining the elements to be reused according to the identification information of the elements to be reused comprises:
locating a source widget according to the identification information of the elements to be reused; and
running the source widget, and obtaining the elements to be reused from the source widget.

17. The method according to claim 15, wherein the parsing the logical relation comprises:
parsing the logical relation from a configuration file, when the logical relation is written in a configuration file;
or,
providing the logical relation for a script language to invoke, when the logical relation is used as a system function;
or,
executing the logical relation through a script engine, when the logical relation is written in a script area of the widget.

18. The apparatus for generating a widget according to claim 9, additionally comprising a widget engine comprising:
a recognition unit (U701), configured to recognize a widget comprising identification information and a logical relation of elements to be reused;
an obtaining unit (U702), configured to obtain the elements to be reused from a source widget according to the identification information of the elements to be reused; and
a parsing unit (U703), configured to parse the logical relation, insert the elements to be reused into the widget, and execute and render the widget;
wherein a source widget refers to an existing widget; the elements to be reused comprise at least one type of the elements including the source widget, a node in a Document Object Model, DOM, tree of the source widget, and a variable or an object in the source widget which is created in a running procedure; a logical relation between the elements to be used refers to a logical relation between elements to be reused in a widget to be generated, includes at least one type of a combination relation, a precedence relation or a collaboration relation, and is expressed in a language recognizable to a widget running apparatus.

19. The widget engine according to claim 18, wherein the obtaining unit is further configured to locate a source widget according to the identification information of the elements to be reused, run the source widget, and obtain the elements to be reused from the source widget.

20. The widget engine according to claim 18, wherein the parsing unit comprises:
a first parsing sub-unit (U7031), configured to parse the logical relation from a configuration file, when the logical relation is written in a configuration file;
or,
a second parsing sub-unit (U7032), configured to invoke, through a script language, the logical relation used as a system function;
or,
a third parsing sub-unit (U7033), configured to execute the logical relation through a script engine, when the logical relation is written in a script area of the widget.

21. A client device, **characterized by** comprising:
an apparatus for generating a widget, configured to obtain identification information of elements to be reused in a source widget, generate a logical relation between the elements to be reused, and generate code of a widget carrying the identification information of the elements to be reused and the logical relation according to the identification information of the elements to be reused and the logical relation; and
a widget engine, configured to obtain the elements to be reused according to the identification information of the elements to be reused, parse the logical relation, insert the elements to be reused into the widget, and execute and render the widget;
wherein the widget is a small, user-interface based application, is formed of markup language and script language, the source widget refers to an existing widget; the elements to be reused comprise the entire source widget, a node in a Document Object Model, DOM, tree of the source widget, and a variable or an object in the source widget which is created in a running procedure; the variable or the object in the source widget is a leaf node in an extended DOM tree of the source widget, wherein the extended DOM tree is constructed by using a variable or an object associated with a certain node in a DOM tree of the source widget as a leaf node of the certain node;
wherein a logical relation between the elements to be used refers to a logical relation between elements to be reused in a widget to be generated, includes a combination relation and a precedence relation wherein the combination relation means to combine elements to be used and the precedence relation refers to a relation that an output of a previous element to be reused is used as an input of a next element to be reused; the logical relation is generated by writing the logical relation in the markup language, in a configuration file or in the script language.

## Patentansprüche

1. Verfahren zum Erzeugen eines Widgets, wobei ein Widget eine kleine anwenderschnittstellenbasierte Anwendung ist und aus Auszeichnungssprache und Skriptsprache gebildet ist, **dadurch gekennzeichnet, dass** es Folgendes umfasst:
Erhalten von Identifizierungsinformationen von Elementen in einem Ursprungs-Widget, die wiederverwendet werden sollen, wobei sich das Ursprungs-Widget auf ein existierendes Widget bezieht; die Elemente, die wiederverwendet werden sollen, ein gesamtes Ursprungs-Widget, einen Knoten in einem Dokumentenobjektmodell-Baum, DOM-Baum, eines Ursprungs-Widgets und eine Variable oder ein Objekt in einem Ursprungs-Widget, das in einer laufenden Prozedur erzeugt wird, umfassen; wobei die Variable oder das Objekt in dem Ursprungs-Widget ein Blattknoten in einem erweiterten DOM-Baum des Ursprungs-Widgets ist, wobei der erweiterte DOM-Baum unter Verwendung einer Variablen oder eines Objekts, die/das einem speziellen Knoten in einem DOM-Baum des Ursprungs-Widgets als ein Blattknoten des speziellen Knotens zugeordnet ist, konstruiert wird;
Erzeugen einer logischen Beziehung zwischen den Elementen, die wiederverwendet werden sollen, wobei sich eine logische Beziehung zwischen den Elementen, die verwendet werden sollen, auf eine logische Beziehung zwischen Elementen, die in einem Widget, das erzeugt werden soll, wiederverwendet werden sollen, bezieht und eine Kombinationsbeziehung und eine Präzedenzbeziehung enthält; wobei die Kombinationsbeziehung bedeutet, Elemente, die verwendet werden sollen, zu kombinieren, und sich die Präzedenzbeziehung auf eine Beziehung bezieht, dass eine Ausgabe eines vorangehenden Elements, das wiederverwendet werden soll, als eine Eingabe eines nächsten Elements, das wiederverwendet werden soll, verwendet wird; und die logische Beziehung durch Schreiben der logischen Beziehung in der Auszeichnungssprache, in einer Konfigurationsdatei oder in der Skriptsprache erzeugt wird; und
Erzeugen von Code eines Widgets, der die Identifizierungsinformationen der Elemente, die wiederverwendet werden sollen, und die logische Beziehung gemäß den Identifizierungsinformationen der Elemente, die wiederverwendet werden sollen, und die logische Beziehung umfasst.

2. Verfahren nach Anspruch 1, wobei das Erhalten der Identifizierungsinformationen der Elemente, die wiederverwendet werden sollen, in dem Ursprungs-Widget Folgendes umfasst:
Empfangen einer Anweisung, dass ein Anwender ein Element in dem Ursprungs-Widget auswählt, wobei die Identifizierungsinformationen über das durch den Anwender ausgewählte Element, das in der Anweisung angegeben ist, die Identifizierungsinformationen der Elemente, die wiederverwendet werden sollen, sind.

3. Verfahren nach Anspruch 1, wobei das Verfahren vor dem Erzeugen der logischen Beziehung zwischen den Elementen, die wiederverwendet werden sollen, ferner Folgendes umfasst:
Empfangen einer Anweisung, dass ein Anwender die logische Beziehung zwischen den Elementen, die wiederverwendet werden sollen, einstellt, wobei die logische Beziehung, die durch den Anwender eingestellt ist und in der Anweisung angegeben ist, die logische Beziehung unter Informationen ist, die wiederverwendet werden sollen.

4. Verfahren nach Anspruch 1, wobei die Elemente, die wiederverwendet werden sollen, das Ursprungs-Widget umfassen, und die Identifizierungsinformationen der Elemente, die wiederverwendet werden sollen, Folgendes umfassen:
einen Bezeichner (ID) des Ursprungs-Widgets, der durch ein System zugewiesen ist, oder einen Speicherpfad des Ursprungs-Widgets.

5. Verfahren nach Anspruch 1, wobei die Elemente, die wiederverwendet werden sollen, einen Knoten in einem DOM-Baum des Ursprungs-Widgets umfassen, und die Identifizierungsinformationen der Elemente, die wiederverwendet werden sollen, Folgendes umfassen:
einen ID des Knotens oder einen Pfad des Knotens in dem DOM-Baum des Ursprungs-Widgets.

6. Verfahren nach Anspruch 1, wobei ein Pfad des Blattknotens in dem erweiterten DOM-Baum die Identifizierungsinformationen der Elemente ist, die wiederverwendet werden sollen.

7. Verfahren nach Anspruch 1, das ferner Folgendes umfasst:
Speichern der Identifizierungsinformationen der Elemente, die wiederverwendet werden sollen, in einem Skriptbereich einer Widget-Quelldatei;
oder
Speichern der Identifizierungsinformationen der Elemente, die wiederverwendet werden sollen, in einer Konfigurationsdatei einer Widget-Quelldatei;
oder
Speichern der Identifizierungsinformationen der Elemente, die wiederverwendet werden sollen, in einer Layout-Datei einer Widget-Quelldatei.

8. Verfahren nach Anspruch 1, das ferner Folgendes umfasst:
Speichern der Identifizierungsinformationen der Elemente, die wiederverwendet werden sollen, als eine Zeichenkette, eine Skriptvariable, eine Referenz auf einen "Uniform Resource Locator" (URL) oder ein Tag oder ein Tag-Attribut in einer Auszeichnungssprache.

9. Vorrichtung zum Erzeugen eines Widgets, wobei ein Widget eine kleine anwenderschnittstellenbasierte Anwendung ist und aus Auszeichnungssprache und Skriptsprache gebildet ist, **dadurch gekennzeichnet, dass** sie Folgendes umfasst: eine Identifizierungseinheit (U501), die konfiguriert ist, Identifizierungsinformationen von Elementen in Ursprungs-Widgets, die wiederverwendet werden sollen, zu erhalten, wobei sich die Ursprungs-Widgets auf existierende Widgets beziehen; die Elemente, die wiederverwendet werden sollen, ein gesamtes Ursprungs-Widget, einen Knoten in einem Dokumentenobjektmodell-Baum, DOM-Baum, eines Ursprungs-Widgets und eine Variable oder ein Objekt in einem Ursprungs-Widget, das in einer laufenden Prozedur erzeugt wird, umfassen; wobei die Variable oder das Objekt in dem Ursprungs-Widget ein Blattknoten in einem erweiterten DOM-Baum des Ursprungs-Widgets ist, wobei der erweiterte DOM-Baum unter Verwendung einer Variablen oder eines Objekts, die/das einem speziellen Knoten in einem DOM-Baum des Ursprungs-Widgets als ein Blattknoten des speziellen Knotens zugeordnet ist, konstruiert wird;
eine Erzeugungseinheit (U502) für eine logische Beziehung, die konfiguriert ist, eine logische Beziehung zwischen den Elementen, die wiederverwendet werden sollen, zu erzeugen, wobei sich eine logische Beziehung zwischen den Elementen, die verwendet werden sollen, auf eine logische Beziehung zwischen Elementen, die in einem Widget, das erzeugt werden soll, wiederverwendet werden sollen, bezieht und eine Kombinationsbeziehung und eine Präzedenzbeziehung enthält; wobei die Kombinationsbeziehung bedeutet, Elemente, die verwendet werden sollen, zu kombinieren, und sich die Präzedenzbeziehung auf eine Beziehung bezieht, dass eine Ausgabe eines vorangehenden Elements, das wiederverwendet werden soll, als eine Eingabe eines nächsten Elements, das wiederverwendet werden soll, verwendet wird; und die logische Beziehung durch Schreiben der logischen Beziehung in der Auszeichnungssprache, in einer Konfigurationsdatei oder in der Skriptsprache erzeugt wird; und
eine Widget-Erzeugungseinheit (U503), die konfiguriert ist, Code eines Widgets zu erzeugen, der die Identifizierungsinformationen der Elemente, die wiederverwendet werden sollen, und die logische Beziehung gemäß den Identifizierungsinformationen der Elemente, die wiederverwendet werden sollen, und die logische Beziehung führt.

10. Vorrichtung nach Anspruch 9, wobei die Identifizierungseinheit Folgendes umfasst: eine Elementauswahlanweisungsempfangsuntereinheit (U5011), die konfiguriert ist, eine Anweisung zu empfangen, dass ein Anwender ein Element in dem Ursprungs-Widget auswählt, wobei die Identifizierungsinformationen über das durch den Anwender ausgewählte Element, das in der Anweisung angegeben ist, die Identifizierungsinformationen der Elemente, die wiederverwendet werden sollen, sind.

11. Vorrichtung nach Anspruch 9, die ferner Folgendes umfasst:
eine Anweisungsempfangseinheit (U504) für logische Beziehung, die konfiguriert ist, eine Anweisung zu empfangen, dass ein Anwender die logische Beziehung zwischen den Elementen, die wiederverwendet werden sollen, einstellt, wobei die logische Beziehung, die durch den Anwender eingestellt ist und in der Anweisung angegeben ist, die logische Beziehung unter Informationen ist, die wiederverwendet werden sollen.

12. Vorrichtung nach Anspruch 9, wobei die Elemente, die wiederverwendet werden sollen, eine Variable oder ein Objekt in dem Ursprungs-Widget umfassen, die/das in einer laufenden Prozedur erzeugt wird, und wobei die Identifizierungseinheit Folgendes umfasst:
eine Konstruktionsuntereinheit (U5012) für einen erweiterten DOM-Baum, die konfiguriert ist, einen erweiterten DOM-Baum für den DOM-Baum des Ursprungs-Widgets zu konstruieren und eine Variable oder ein Objekt, die/das wiederverwendet werden soll und einem speziellen Knoten in dem DOM-Baum des Ursprungs-Widgets zugeordnet ist, als einen Blattknoten des Knotens zu verwenden, wobei ein Pfad des Blattknotens in dem erweiterten DOM-Baum die Identifizierungsinformationen der Elemente, die wiederverwendet werden sollen, ist.

13. Vorrichtung nach Anspruch 9, die ferner Folgendes umfasst:
eine erste Speichereinheit (U505), die konfiguriert ist, die Identifizierungsinformationen der Elemente, die wiederverwendet werden sollen, in einem Skriptbereich einer Widget-Quelldatei zu speichern;
oder
eine zweite Speichereinheit (U506), die konfiguriert ist, die Identifizierungsinformationen der Elemente, die wiederverwendet werden sollen, in einer Konfigurationsdatei einer Widget-Quelldatei zu speichern;
oder
eine dritte Speichereinheit (U507), die konfiguriert ist, die Identifizierungsinformationen der Elemente, die wiederverwendet werden sollen, in einer Layout-Datei einer Widget-Quelldatei zu speichern.

14. Vorrichtung nach Anspruch 9, die ferner Folgendes umfasst:
eine Speicherformbestimmungseinheit (U508), die konfiguriert ist, die Identifizierungsinformationen der Elemente, die wiederverwendet werden sollen, als eine Zeichenkette, eine Skriptvariable, eine Referenz auf einen "Uniform Resource Locator" (URL) oder ein Tag oder ein Tag-Attribut in einer Auszeichnungssprache zu speichern.

15. Verfahren zum Erzeugen eines Widgets nach dem Verfahren von Anspruch 1, das zusätzlich Folgendes umfasst:
Erkennen eines Widgets, das Identifizierungsinformationen und eine logische Beziehung von Elementen, die wiederverwendet werden sollen, umfasst;
Erhalten der Elemente, die wiederverwendet werden sollen, aus einem Ursprungs-Widget gemäß den Identifizierungsinformationen der Elemente, die wiederverwendet werden sollen; und
Analysieren der logischen Beziehung, Einfügen der Elemente, die wiederverwendet werden sollen, in das Widget und Ausführen und Wiedergeben des Widgets;
wobei sich ein Ursprungs-Widget auf ein existierendes Widget bezieht; die Elemente, die wiederverwendet werden sollen, das gesamte Ursprungs-Widget, einen Knoten in einem Dokumentenobjektmodell-Baum, DOM-Baum, des Ursprungs-Widgets und eine Variable oder ein Objekt in dem Ursprungs-Widget, das in einer laufenden Prozedur erzeugt wird, umfassen; wobei die Variable oder das Objekt in dem Ursprungs-Widget ein Blattknoten in einem erweiterten DOM-Baum des Ursprungs-Widgets ist, wobei der erweiterte DOM-Baum unter Verwendung einer Variablen oder eines Objekts, die/das einem speziellen Knoten in einem DOM-Baum des Ursprungs-Widgets als ein Blattknoten des speziellen Knotens zugeordnet ist, konstruiert wird;
wobei sich eine logische Beziehung zwischen den Elementen, die verwendet werden sollen, auf eine logische Beziehung zwischen Elementen, die in einem Widget, das erzeugt werden soll, wiederverwendet werden sollen, bezieht und eine Kombinationsbeziehung und eine Präzedenzbeziehung enthält; wobei die Kombinationsbeziehung bedeutet, Elemente, die verwendet werden sollen, zu kombinieren, und sich die Präzedenzbeziehung auf eine Beziehung bezieht, dass eine Ausgabe eines vorangehenden Elements, das wiederverwendet werden soll, als eine Eingabe eines nächsten Elements, das wiederverwendet werden soll, verwendet wird; die logische Beziehung durch Schreiben der logischen Beziehung in der Auszeichnungssprache, in einer Konfigurationsdatei oder in der Skriptsprache erzeugt wird.

16. Verfahren nach Anspruch 15, wobei das Erhalten der Elemente, die wiederverwendet werden sollen, gemäß den Identifizierungsinformationen der Elemente, die wiederverwendet werden sollen, Folgendes umfasst:
Lokalisieren eines Ursprungs-Widgets gemäß den Identifizierungsinformationen der Elemente, die wiederverwendet werden sollen; und
Ablaufenlassen des Ursprungs-Widgets und Erhalten der Elemente, die wiederverwendet werden sollen, aus dem Ursprungs-Widget.

17. Verfahren nach Anspruch 15, wobei das Analysieren der logischen Beziehung Folgendes umfasst:
Analysieren der logischen Beziehung aus einer Konfigurationsdatei, wenn die logische Beziehung in eine Konfigurationsdatei geschrieben ist;
oder
Bereitstellen der logischen Beziehung für eine Skriptsprache zum Aufrufen, wenn die logische Beziehung als eine Systemfunktion verwendet wird;
oder
Ausführen der logischen Beziehung durch eine Skript-"Engine", wenn die logische Beziehung in einen Skriptbereich des Widgets geschrieben ist.

18. Vorrichtung zum Erzeugen eines Widgets nach Anspruch 9, die zusätzlich eine Widget-"Engine" umfasst, die Folgendes umfasst:
eine Erkennungseinheit (U701), die konfiguriert ist, ein Widget zu erkennen, das Identifizierungsinformationen und eine logische Beziehung von Elementen, die wiederverwendet werden sollen, umfasst;
eine Erhalteeinheit (U702), die konfiguriert ist, die Elemente, die wiederverwendet werden sollen, aus einem Ursprungs-Widget gemäß den Identifizierungsinformationen der Elemente, die wiederverwendet werden sollen, zu erhalten; und
eine Analysiereinheit (U703), die konfiguriert ist, die logische Beziehung zu analysieren, die Elemente, die wiederverwendet werden sollen, in das Widget einzufügen und das Widget auszuführen und wiederzugeben;
wobei sich ein Ursprungs-Widget auf ein existierendes Widget bezieht; die Elemente, die wiederverwendet werden sollen, wenigstens einen Typ der Elemente, die das Ursprungs-Widget enthalten, einen Knoten in einem Dokumentenobjektmodell-Baum, DOM-Baum, des Ursprungs-Widgets und eine Variable oder ein Objekt in dem Ursprungs-Widget, das in einer laufenden Prozedur erzeugt wird, umfassen; sich eine logische Beziehung zwischen den Elementen, die wiederverwendet werden sollen, auf eine logische Beziehung zwischen Elementen, die in einem Widget, das erzeugt werden soll, wiederverwendet werden sollen, bezieht, wenigstens einen Typ aus einer Kombinationsbeziehung, einer Präzedenzbeziehung oder einer Kollaborationsbeziehung enthält und in einer Sprache ausgedrückt ist, die durch eine Vorrichtung, die das Widget ablaufen lässt, erkennbar ist.

19. Widget-"Engine" nach Anspruch 18, wobei die Erhalteeinheit ferner konfiguriert ist, ein Ursprungs-Widget gemäß den Identifizierungsinformationen der Elemente, die wiederverwendet werden sollen, zu lokalisieren, das Ursprungs-Widget ablaufen zu lassen und die Elemente, die wiederverwendet werden sollen, aus dem Ursprungs-Widget zu erhalten.

20. Widget-"Engine" nach Anspruch 18, wobei die Analysiereinheit Folgendes umfasst:
eine erste Analysieruntereinheit (U7031), die konfiguriert ist, die logische Beziehung aus einer Konfigurationsdatei zu analysieren, wenn die logische Beziehung in eine Konfigurationsdatei geschrieben ist;
oder
eine zweite Analysieruntereinheit (U7032), die konfiguriert ist, durch eine Skriptsprache die logische Beziehung, die als eine Systemfunktion verwendet wird, aufzurufen;
oder
eine dritte Analysieruntereinheit (U7033), die konfiguriert ist, die logische Beziehung durch eine Skript-"Engine" auszuführen, wenn die logische Beziehung in einen Skriptbereich des Widgets geschrieben ist.

21. Clienteinrichtung, **dadurch gekennzeichnet, dass** sie Folgendes umfasst:
eine Vorrichtung zum Erzeugen eines Widgets, die konfiguriert ist, Identifizierungsinformationen von Elementen in einem Ursprungs-Widget, die wiederverwendet werden sollen, zu erhalten, eine logische Beziehung zwischen den Elementen, die wiederverwendet werden sollen, zu erzeugen und Code eines Widgets zu erzeugen, der die Identifizierungsinformationen der Elemente, die wiederverwendet werden sollen, und die logische Beziehung gemäß den Identifizierungsinformationen der Elemente, die wiederverwendet werden sollen, und die logische Beziehung führt; und
eine Widget-"Engine", die konfiguriert ist, die Elemente, die wiederverwendet werden sollen, gemäß den Identifizierungsinformationen der Elemente, die wiederverwendet werden sollen, zu erhalten, die logische Beziehung zu analysieren, die Elemente, die wiederverwendet werden sollen, in das Widget einzufügen und das Widget auszuführen und wiederzugeben;
wobei das Widget eine kleine anwenderschnittstellenbasierte Anwendung ist, aus Auszeichnungssprache und Skriptsprache gebildet ist und sich das Ursprungs-Widget auf ein existierendes Widget bezieht; die Elemente, die wiederverwendet werden sollen, das gesamte Ursprungs-Widget, einen Knoten in einem Dokumentenobjektmodell-Baum, DOM-Baum, des Ursprungs-Widgets und eine Variable oder ein Objekt in dem Ursprungs-Widget, das in einer laufenden Prozedur erzeugt wird, umfassen; wobei die Variable oder das Objekt in dem Ursprungs-Widget ein Blattknoten in einem erweiterten DOM-Baum des Ursprungs-Widgets ist, wobei der erweiterte DOM-Baum unter Verwendung einer Variablen oder eines Objekts, die/das einem speziellen Knoten in einem DOM-Baum des Ursprungs-Widgets als ein Blattknoten des speziellen Knotens zugeordnet ist, konstruiert wird;
wobei sich eine logische Beziehung zwischen den Elementen, die verwendet werden sollen, auf eine logische Beziehung zwischen Elementen, die in einem Widget, das erzeugt werden soll, wiederverwendet werden sollen, bezieht und eine Kombinationsbeziehung und eine Präzedenzbeziehung enthält, wobei die Kombinationsbeziehung bedeutet, Elemente, die verwendet werden sollen, zu kombinieren, und sich die Präzedenzbeziehung auf eine Beziehung bezieht, dass eine Ausgabe eines vorangehenden Elements, das wiederverwendet werden soll, als eine Eingabe eines nächsten Elements, das wiederverwendet werden soll, verwendet wird; die logische Beziehung durch Schreiben der logischen Beziehung in der Auszeichnungssprache, in einer Konfigurationsdatei oder in der Skriptsprache erzeugt wird.

## Revendications

1. Procédé destiné à générer un gadget logiciel, dans lequel un gadget logiciel est une petite application basée sur l'interface utilisateur et est formé d'un langage de balisage et d'un langage de script, **caractérisé en ce qu'**il comprend :
l'obtention d'informations d'identification d'éléments devant être réutilisés dans un gadget logiciel source, dans lequel le gadget logiciel source désigne un gadget logiciel existant ; les éléments devant être réutilisés comprennent un gadget logiciel source entier, un noeud dans un arbre de Modèle d'Objet de Document, DOM, d'un gadget logiciel source, et une variable ou un objet contenu dans un gadget logiciel source qui est créé lors d'une procédure en cours d'exécution ; la variable ou l'objet contenu dans le gadget logiciel source est un noeud feuille dans un arbre DOM étendu du gadget logiciel source, dans lequel l'arbre DOM étendu est construit en utilisant une variable ou un objet associé à un certain noeud dans un arbre DOM du gadget logiciel source en tant que noeud feuille du certain noeud ;
la génération d'une relation logique entre les éléments devant être réutilisés, dans lequel une relation logique entre les éléments devant être utilisés désigne une relation logique entre les éléments devant être réutilisés dans un gadget logiciel devant être généré et comporte une relation de combinaison et une relation de priorité ; dans lequel la relation de combinaison consiste à combiner des éléments devant être utilisés et la relation de priorité désigne une relation selon laquelle une sortie d'un élément précédent devant être réutilisé est utilisée comme entrée d'un élément suivant devant être réutilisé ; et la relation logique est générée par écriture de la relation logique dans le langage de balisage, dans un fichier de configuration ou dans le langage de script ; et
la génération du code d'un gadget logiciel comprenant les informations d'identification des éléments devant être réutilisés et la relation logique conformément aux informations d'identification des éléments devant être réutilisés et à la relation logique.

2. Procédé selon la revendication 1, dans lequel l'obtention des informations d'identification des éléments devant être réutilisés dans le gadget logiciel source comprend :
la réception d'une instruction selon laquelle un utilisateur sélectionne un élément dans le gadget logiciel source, dans lequel les informations d'identification concernant l'élément sélectionné par l'utilisateur, qui est indiqué dans l'instruction, sont les informations d'identification des éléments devant être réutilisés.

3. Procédé selon la revendication 1, dans lequel, avant de générer la relation logique entre les éléments devant être réutilisés, le procédé comprend en outre :
la réception d'une instruction selon laquelle un utilisateur définit la relation logique entre les éléments devant être réutilisés, dans lequel la relation logique définie par l'utilisateur et indiquée dans l'instruction est la relation logique entre des informations devant être réutilisées.

4. Procédé selon la revendication 1, dans lequel les éléments devant être réutilisés comprennent le gadget logiciel source et les informations d'identification des éléments devant être réutilisés comprennent :
un identifiant (ID) du gadget logiciel source alloué par un système ou un chemin de stockage du gadget logiciel source.

5. Procédé selon la revendication 1, dans lequel les éléments devant être réutilisés comprennent un noeud dans un arbre DOM du gadget logiciel source, et les informations d'identification des éléments devant être réutilisés comprennent :
un ID du noeud ou un chemin du noeud dans l'arbre DOM du gadget logiciel source.

6. Procédé selon la revendication 1, dans lequel un chemin du noeud feuille dans l'arbre DOM étendu est constitué par les informations d'identification des éléments devant être réutilisés.

7. Procédé selon la revendication 1, comprenant en outre :
le stockage des informations d'identification des éléments devant être réutilisés dans une zone de script d'un fichier source de gadget logiciel ;
ou le stockage des informations d'identification des éléments devant être réutilisés dans un fichier de configuration d'un fichier source de gadget logiciel ;
ou le stockage des informations d'identification des éléments devant être réutilisés dans un fichier de mise en page d'un fichier source de gadget logiciel.

8. Procédé selon la revendication 1, comprenant en outre :
le stockage des informations d'identification des éléments devant être réutilisés sous la forme d'une chaîne de caractères, d'une variable de script, d'une référence de Localisateur de Ressource Uniforme (URL), ou d'une balise ou d'un attribut de balise dans un langage de balisage.

9. Appareil destiné à générer un gadget logiciel, dans lequel un gadget logiciel est une petite application basée sur l'interface utilisateur et est formé d'un langage de balisage et d'un langage de script, **caractérisé en ce qu'**il comprend :
une unité d'identification (U501), configurée pour obtenir des informations d'identification d'éléments devant être réutilisés dans des gadgets logiciels sources, dans lequel les gadgets logiciels sources désignent des gadgets logiciels existants ; les éléments devant être réutilisés comprennent un gadget logiciel source entier, un noeud dans un arbre de Modèle d'Objet de Document, DOM, d'un gadget logiciel source, et une variable ou un objet contenu dans un gadget logiciel source qui est créé lors d'une procédure en cours d'exécution ; la variable ou l'objet contenu dans le gadget logiciel source est un noeud feuille dans un arbre DOM étendu du gadget logiciel source, dans lequel l'arbre DOM étendu est construit en utilisant une variable ou un objet associé à un certain noeud dans un arbre DOM du gadget logiciel source en tant que noeud feuille du certain noeud ;
une unité de génération de relation logique (U502), configurée pour générer une relation logique entre les éléments devant être réutilisés, dans lequel une relation logique entre les éléments devant être utilisés désigne une relation logique entre les éléments devant être réutilisés dans un gadget logiciel devant être généré et comporte une relation de combinaison et une relation de priorité ; dans lequel la relation de combinaison consiste à combiner des éléments devant être utilisés et la relation de priorité désigne une relation selon laquelle une sortie d'un élément précédent devant être réutilisé est utilisée comme entrée d'un élément suivant devant être réutilisé ; et la relation logique est générée par écriture de la relation logique dans le langage de balisage, dans un fichier de configuration ou dans le langage de script ; et
une unité de génération de gadget logiciel (U503), configurée pour générer le code d'un gadget logiciel transportant les informations d'identification des éléments devant être réutilisés et la relation logique conformément aux informations d'identification des éléments devant être réutilisés et à la relation logique.

10. Appareil selon la revendication 9, dans lequel l'unité d'identification comprend :
une sous-unité de réception d'instruction de sélection d'élément (U5011), configurée pour recevoir une instruction selon laquelle un utilisateur sélectionne un élément dans le gadget logiciel source, dans lequel les informations d'identification concernant l'élément sélectionné par l'utilisateur, qui est indiqué dans l'instruction, sont les informations d'identification des éléments devant être réutilisés.

11. Appareil selon la revendication 9, comprenant en outre :
une unité de réception d'instruction de relation logique (U504), configurée pour recevoir une instruction selon laquelle un utilisateur définit la relation logique entre les éléments devant être réutilisés, dans lequel la relation logique définie par l'utilisateur et indiquée dans l'instruction est la relation logique entre des informations devant être réutilisées.

12. Appareil selon la revendication 9, dans lequel les éléments devant être réutilisés comprennent une variable ou un objet contenu dans le gadget logiciel source qui est créé lors d'une procédure en cours d'exécution, et l'unité d'identification comprend :
une sous-unité de construction d'arbre DOM étendu (U5012), configurée pour construire un arbre DOM étendu pour l'arbre DOM du gadget logiciel source, et pour utiliser une variable ou un objet devant être réutilisé et associé à un certain noeud dans l'arbre DOM du gadget logiciel source comme noeud feuille du noeud, dans lequel un chemin du noeud feuille dans l'arbre DOM étendu est constitué par les informations d'identification des éléments devant être réutilisés.

13. Appareil selon la revendication 9, comprenant en outre :
une première unité de stockage (U505), configurée pour stocker les informations d'identification des éléments devant être réutilisés dans une zone de script d'un fichier source de gadget logiciel ;
ou une deuxième unité de stockage (U506), configurée pour stocker les informations d'identification des éléments devant être réutilisés dans un fichier de configuration d'un fichier source de gadget logiciel ;
ou une troisième unité de stockage (U507), configurée pour stocker les informations d'identification des éléments devant être réutilisés dans un fichier de mise en page d'un fichier source de gadget logiciel.

14. Appareil selon la revendication 9, comprenant en outre :
une unité de détermination de forme de stockage (U508), configurée pour stocker les informations d'identification des éléments devant être réutilisés sous la forme d'une chaîne de caractères, d'une variable de script, d'une référence de Localisateur de Ressource Uniforme (URL), ou d'une balise ou d'un attribut de balise dans un langage de balisage.

15. Procédé destiné à générer un gadget logiciel selon le procédé de la revendication 1, comprenant en outre :
la reconnaissance d'un gadget logiciel comprenant des informations d'identification et une relation logique d'éléments devant être réutilisés ;
l'obtention des éléments devant être réutilisés à partir d'un gadget logiciel source conformément aux informations d'identification des éléments devant être réutilisés ; et
l'analyse syntaxique de la relation logique, l'insertion des éléments devant être réutilisés dans le gadget logiciel, et l'exécution et le rendu du gadget logiciel ;
dans lequel un gadget logiciel source désigne un gadget logiciel existant ; les éléments devant être réutilisés comprennent le gadget logiciel source entier, un noeud dans un arbre de Modèle d'Objet de Document, DOM, du gadget logiciel source, et une variable ou un objet contenu dans le gadget logiciel source qui est créé lors d'une procédure en cours d'exécution ; la variable ou l'objet contenu dans le gadget logiciel source est un noeud feuille dans un arbre DOM étendu du gadget logiciel source, dans lequel l'arbre DOM étendu est construit en utilisant une variable ou un objet associé à un certain noeud dans un arbre DOM du gadget logiciel source en tant que noeud feuille du certain noeud ;
dans lequel une relation logique entre les éléments devant être utilisés désigne une relation logique entre les éléments devant être réutilisés dans un gadget logiciel devant être généré, comporte une relation de combinaison et une relation de priorité ; dans lequel la relation de combinaison consiste à combiner des éléments devant être utilisés et la relation de priorité désigne une relation selon laquelle une sortie d'un élément précédent devant être réutilisé est utilisée comme entrée d'un élément suivant devant être réutilisé ; la relation logique est générée par écriture de la relation logique dans le langage de balisage, dans un fichier de configuration ou dans le langage de script.

16. Procédé selon la revendication 15, dans lequel l'obtention des éléments devant être réutilisés conformément aux informations d'identification des éléments devant être réutilisés comprend :
la localisation d'un gadget logiciel source conformément aux informations d'identification des éléments devant être réutilisés ; et
l'exécution du gadget logiciel source, et l'obtention des éléments devant être réutilisés à partir du gadget logiciel source.

17. Procédé selon la revendication 15, dans lequel l'analyse syntaxique de la relation logique comprend :
l'analyse syntaxique de la relation logique à partir d'un fichier de configuration, lorsque la relation logique est écrite dans un fichier de configuration ;
ou la fourniture de la relation logique pour un langage de script à invoquer, lorsque la relation logique est utilisée en tant que fonction système ;
ou l'exécution de la relation logique par l'intermédiaire d'un moteur de script, lorsque la relation logique est écrite dans une zone de script du gadget logiciel.

18. Appareil destiné à générer un gadget logiciel selon la revendication 9, comprenant en outre un moteur de gadget logiciel comprenant :
une unité de reconnaissance (U701), configurée pour reconnaître un gadget logiciel comprenant des informations d'identification et une relation logique d'éléments devant être réutilisés ;
une unité d'obtention (U702), configurée pour obtenir les éléments devant être réutilisés à partir d'un gadget logiciel source conformément aux informations d'identification des éléments devant être réutilisés ; et
une unité d'analyse syntaxique (U703), configurée pour analyser syntaxiquement la relation logique, pour insérer les éléments devant être réutilisés dans le gadget logiciel, et pour exécuter et effectuer le rendu du gadget logiciel ;
dans lequel un gadget logiciel source désigne un gadget logiciel existant ; les éléments devant être réutilisés comprennent au moins un type des éléments comportant le gadget logiciel source, un noeud dans un arbre de Modèle d'Objet de Document, DOM, du gadget logiciel source, et une variable ou un objet contenu dans le gadget logiciel source qui est créé lors d'une procédure en cours d'exécution ; une relation logique entre les éléments devant être utilisés désigne une relation logique entre les éléments devant être réutilisés dans un gadget logiciel devant être généré, comporte au moins un type de relation de combinaison, une relation de priorité ou une relation de collaboration, et est exprimée dans un langage reconnaissable par un appareil d'exécution de gadget logiciel.

19. Moteur de gadget logiciel selon la revendication 18, dans lequel l'unité d'obtention est en outre configurée pour localiser un gadget logiciel source conformément aux informations d'identification des éléments devant être réutilisés, pour exécuter le gadget logiciel source et pour obtenir les éléments devant être réutilisés à partir du gadget logiciel source.

20. Moteur de gadget logiciel selon la revendication 18, dans lequel l'unité d'analyse syntaxique comprend :
une première sous-unité d'analyse syntaxique (U7031), configurée pour analyser syntaxiquement la relation logique à partir d'un fichier de configuration, lorsque la relation logique est écrite dans un fichier de configuration ;
ou une deuxième sous-unité d'analyse syntaxique (U7032), configurée pour invoquer, par l'intermédiaire d'un langage de script, la relation logique utilisée en tant que fonction système ;
ou une troisième sous-unité d'analyse syntaxique (U7033), configurée pour exécuter la relation logique par l'intermédiaire d'un moteur de script, lorsque la relation logique est écrite dans une zone de script du gadget logiciel.

21. Dispositif client, **caractérisé en ce qu'**il comprend :
un appareil destiné à générer un gadget logiciel, configuré pour obtenir des informations d'identification d'éléments devant être réutilisés dans un gadget logiciel source, générer une relation logique entre les éléments devant être réutilisés, et générer le code d'un gadget logiciel transportant les informations d'identification des éléments devant être réutilisés et la relation logique conformément aux informations d'identification des éléments devant être réutilisés et à la relation logique ; et
un moteur de gadget logiciel, configuré pour obtenir les éléments devant être réutilisés conformément aux informations d'identification des éléments devant être réutilisés, pour analyser syntaxiquement la relation logique, pour insérer les éléments devant être réutilisés dans le gadget logiciel, et pour exécuter et effectuer le rendu du gadget logiciel ;
dans lequel le gadget logiciel est une petite application basée sur l'interface utilisateur, et est formé d'un langage de balisage et d'un langage de script, le gadget logiciel source désigne un gadget logiciel existant ; les éléments devant être réutilisés comprennent le gadget logiciel source entier, un noeud dans un arbre de Modèle d'Objet de Document, DOM, du gadget logiciel source, et une variable ou un objet contenu dans le gadget logiciel source qui est créé lors d'une procédure en cours d'exécution ; la variable ou l'objet contenu dans le gadget logiciel source est un noeud feuille dans un arbre DOM étendu du gadget logiciel source, dans lequel l'arbre DOM étendu est construit en utilisant une variable ou un objet associé à un certain noeud dans un arbre DOM du gadget logiciel source en tant que noeud feuille du certain noeud ;
dans lequel une relation logique entre les éléments devant être utilisés désigne une relation logique entre les éléments devant être réutilisés dans un gadget logiciel devant être généré, comporte une relation de combinaison et une relation de priorité, dans lequel la relation de combinaison consiste à combiner des éléments devant être utilisés et la relation de priorité désigne une relation selon laquelle une sortie d'un élément précédent devant être réutilisé est utilisée comme entrée d'un élément suivant devant être réutilisé ; la relation logique est générée par écriture de la relation logique dans le langage de balisage, dans un fichier de configuration ou dans le langage de script.
